# EUROPÄISCHE PATENTSCHRIFT

(11) **EP 0 798 818 B1**
(45) Veröffentlichungstag und Bekanntmachung des Hinweises auf die Patenterteilung: **13.01.1999**
(21) Anmeldenummer: 97104721.2
(22) Anmeldetag: 19.03.1997
(51) Int. Cl.: H01R 25/00

(54) **Gehäuse für Mehrfachsteckdosen**
Housing for multiple sockets
Boîtier pour prises multiples

(30) Priorität: 25.03.1996 DE 29605491 U
(43) Veröffentlichungstag der Anmeldung: 01.10.1997
(73) Patentinhaber: Knürr Mechanik für die Elektronik AG, D-81829 München (DE)
(72) Erfinder: Schlereth,Elmar, 81667 München (DE); Flamme,Hans, 82008 Unterhaching (DE)
(74) Vertreter: Heim, Hans-Karl, Dipl.-Ing.

(56) Entgegenhaltungen:
- EP-A- 0 109 876
- EP-A- 0 673 089
- DE-U- 7 725 911

## Beschreibung

Die Erfindung betrifft ein Gehäuse für eine Mehrfachsteckdose gemäß dem Oberbegriff des Anspruchs 1.

Aus der DE-OS 29 00 148 ist eine Mehrfachsteckdose mit einem Gehäuse bekannt, welches aus einem U-förmigen Unterteil und einem identisch ausgebildeten Oberteil als Abdeckung besteht. Das Oberteil wird über eine Nut-Feder-Verbindung an den endseitigen Längsstegen sowie über das Oberteil und einen Steckdoseneinsatz und im Bereich stirnseitiger Abdeckungen mit dem Unterteil verbunden. Unter- und Oberteil sind Strangpreßprofile. Das Oberteil weist Öffnungen auf, in die Steckdosen hineinragen.

Bei einer Mehrfachsteckdosenleiste der EP-0 109 876 wird ein Gehäuse von einem U-förmigen Profil und einer aufschiebbaren Abdeckung mit Steckdoseneinsätzen gebildet. Kontaktschienenanordnungen oder Module mit parallel angeordneten Kontaktbuchsen und Schutzleiterkontakten werden stirnseitig in das U-förmige Gehäuse eingeschoben.

Nachteile dieser bekannten Gehäuse für Mehrfachsteckdosen sind eine relativ aufwendige Herstellung und Montage.

Aus der EP 0 673 089 A1 ist ein gattungsgemäßes Gehäuse für Mehrfachsteckdosen bekannt, welches einen ein Gehäuse für Mehrfachsteckdosen bekannt, welches einen Boden, Seitenwände und eine Deckplatte mit Ausnehmungen für Steckdoseneinsätze aufweist. Das Gehäuse wird aus einem Zuschnitt eines Bleches durch Umformen und Verbinden von Längskanten des Blechs gebildet.

Das bekannte Gehäuse weist einen rechteckigen Querschnitt mit abgerundeten unteren und oberen Eckbereichen auf. Die in den Ausnehmungen angeordneten Steckdoseneinsätze fluchten mit der Deckplatte oder reichen geringfügig über die Deckplatte hinaus und sind gegen äußere Krafteinwirkungen nicht geschützt.

Der Erfindung liegt die **Aufgabe** zugrunde, ein Gehäuse für eine Mehrfachsteckdose zu schaffen, welches bei einer außerordentlich kostenünstigen Herstellung und Montage besonders robust ausgebildet ist, einen größtmöglichen Schutz des versenkt angeordneten Steckdosen einsätze, Schaltungen und Sicherungen und dergleichen gewährleistet und außerdem einen außerordentlich guten optisch ästhetischen Gesamteindruck vermittelt.

Erfindungsgemäß wird die Aufgabe durch die Merkmale des Anspruchs 1 gelöst. Vorteilhafte und zweckmäßige Ausgestaltungen sind Inhalt der Unteransprüche und der Figurenbeschreibung.

Erfindungsgemäß weist ein Gehäuse für Mehrfachsteckdosen mit einem Boden, Seitenwänden und einer Deckplatte mit Ausnehmungen für Steckdoseneinsätze, Schaltungen und Sicherungen, welches aus einem Zuschnitt eines Bleches durch Umformen und Verbinden der Längskanten des Bleches gebildet ist, Seitenwände mit oberen Längskanten auf. Die oberen Längskanten stehen nach oben über, und die in das Gehäuse integrierte Deckplatte ist, bezogen auf die oberen Längskanten, vertieft angeordnet und bietet dadurch den darin aufgenommenen Steckdoseneinsätzen einen guten Schutz.

Nach des Erfindung wird ein metallenes Gehäuse geschaffen und dafür ein einstückiges Flachmaterial, beispielsweise ein elektrolytisch verzinktes Stahlblech, eingesetzt. Das Stahlblech wird entsprechenden Umformprozessen unterzogen, vorteilhafter Weise nachdem bereits Ausnehmungen für Steckdoseneinsätze, welche im fertigen Gehäuse im Bereich einer integrierten Deckplatte angeordnet sind, vorgefertigt wurden.

Diese Ausnehmungen, welche z.B. für Schuko-Steckdosen kreisrund ausgebildet sind, können vorteilhaft durch einen Stanzvorgang eingebracht werden. Danach werden durch geeignete Umformprozesse, beispielsweise durch Rollieren oder Rollen und Biegen, parallele Seitenwände abgebogen und nach einer 90° -Abwinklung eine Bodenplatte gebildet.

Es ist zweckmäßig, im Bereich der Bodenplatte die aneinandergrenzenden und sich überlappenden Längskantenbereiche des Flachbleches dicht zu verbinden.

Zur Verbindung der Längskanten eignet sich insbesondere das Falzen. Die Längskanten werden folglich zunächst umgebogen und dann ineinander geschoben oder verhakt. Abschließend wird die so gebildete Falznaht zusammengedrückt oder festgeklopft, um eine besonders hohe Stabilität und Dichtigkeit zu erreichen.

Grundsätzlich können auch die allgemein üblichen Verbindungsverfahren für Metallteile eingesetzt werden. Außerdem besteht ohne weiteres die Möglichkeit die Verbindungsnaht bzw. Falznaht auch im Bereich der Seitenflächen oder im Bereich einer Längskante anzuordnen.

Wenn eine Falznaht im Bereich der Längsachse des Bodenbereichs bzw. der Bodenplatte ausgebildet wird, empfiehlt es sich, Standbereiche an der Bodenplatte vorzusehen und die Bodenplatte erhöht auszubilden. Wenn die Standbereiche wenigstens die gleiche Höhe aufweisen, wie die überstehende Falznut, ist die Bodenauflage der Mehrfachsteckdose nicht beeinträchtigt.

Fertigungstechnisch besonders zweckmäßig ist eine überstehende und abgerundete Ausbildung der Randbereiche des Bodens. Die bogenförmigen oder halbkreisförmigen Randbereiche können für eine besonders ansprechende Gesamtwirkung des Gehäuses weitgehend mit Profilierungen in den Seitenwänden des Gehäuses übereinstimmen. So können Nuten, Rillen und Ausnehmungen bzw. Ausformungen als Profilierungen wenigstens in den Seitenwänden, insbesondere während des Umformprozesses, ausgebildet sein und gegebenenfalls mit besonderen Gestaltungen und/oder farbliche Kennzeichnungen, beispielsweise in den Firmenfarben, versehen sein.

Besonders vorteilhaft sind Profilierungen der Seitenwände in Längsrichtung, welche im Innenraum der Mehrfachsteckdose Längsstege bilden, welche insbesondere horizontal verlaufen und zur Führung und Halterung der stirnseitig einschiebbaren Kontaktanordnungen dienen können. Derartige Vorsprünge oder Nasen an den Innenseiten der Seitenwände sollten sinnvollerweise in einer symmetrischen Anordnung ausgebildet sein.

In die kostengünstige Herstellung des erfindungsgemäßen Gehäuses aus einem Zuschnitt eines Flachmaterials und durch Biegevorgänge bzw. Rollierprozesse integriert sind die vertikalen und sich nach oben erstrekkenden Längskanten der Seitenwände im Bereich des Übergangs von der Deckplatte zu den Seitenwänden. Durch die überstehenden Längskanten platte vertieft angeordnet und die Doseneinsätze, welche in die vorgefertigten Ausnehmungen der Deckplatte eingesetzt werden, erfahren durch die Überstände einen vorteilhaften Schutz.

Um eine feste und unverdrehbare Anordnung der Steckdoseneinsätze in den Ausnehmungen zu gewährleisten, ist vorgesehen, die Ausnehmungen mit radial vorstehenden Vorsprüngen, Kanten oder Spitzen zu versehen. Beim Einsetzen der Steckdosen werden sich diese Vorsprünge in das Material der Steckdoseneinsätze einritzen oder einschneiden und verhindern auf diese Weise wirkungsvoll ein Lösen oder Lockern der Einsätze.

Die Vorteile des erfindungsgemäßen einteiligen Gehäuses für Mehrfachsteckdosenleisten bestehen in einer besonders einfachen Fertigung und insbesondere in einer effizienten Komplettierung, bei welcher beispielsweise Kunststoffkörper mit parallel angeordneten Kontaktbändern und Kontaktbuchsen und Kontaktschienen mit Schutzleiterkontakten von der Stirnseite in das Gehäuse eingeschoben und von wenigstens einem innenseitigen Vorsprung an jeder Seitenwand geführt und gehalten werden. Nach dem Verschließen der Stirnseiten, beispielsweise mit einrastbaren, kappenartigen Abdeckungen, sind dann nur noch die Steckdoseneinsätze in die Ausnehmungen der Deckplatte einzusetzen.

Die Erfindung wird nachstehend anhand eines Ausführungsbeispiels weiter erläutert. In der zugehörigen Zeichnung ist ein erfindungsgemäßes Gehäuse in einer perspektivischen, stark schematisierten Darstellung gezeigt.

Das Gehäuse 2 für Mehrfachsteckdosen weist einen nahezu rechteckigen Querschnitt auf und besteht aus einer Deckplatte 8, einem Boden 4 und zwei parallelen Seitenwänden 6.

Das Gehäuse 2 ist aus einem einteiligen Zuschnitt hergestellt, in welchem in einem der späteren Deckplatte 8 zuzuordnenden Bereich Ausnehmungen 10 in einer definierten Anordnung, Abmessung und Anzahl ausgestanzt werden.

Der quadratische oder rechteckige Zuschnitt mit den ausgestanzten Ausnehmungen 10 wird danach entsprechend rolliert und gebogen, um obere Längskanten 17, Profilierungen, beispielsweise Nuten, Rillen oder Ausbohrungen 11, in den Seitenwänden 6 und insbesondere Standbereiche 13 im Bereich der Bodenplatte 4 auszubilden.

Die Profilierungen 11 in den Seitenwänden 6 können beispielsweise eine für den Hersteller der Mehrfachsteckdosenleisten charakteristische Form- und Farbgebung aufweisen. Gleichzeitig dienen insbesondere in einen Innenraum 9 des Gehäuses 2 gerichtete Querstege 18 zur Führung und Halterung einer stirnseitig einschiebbaren Kontaktschienenanordnung (nicht dargestellt).

Wie deutlich aus dem Stirnseitenbereich des Gehäuses 2 erkennbar ist, ist die in das Gehäuse 2 integrierte Deckplatte 8, bezogen auf vertikal ausgerichtete, überstehende, obere Längskanten 17 vertieft ausgebildet. Der Überstand der oberen Längskanten 17 wird durch ein 90-Grad und nachfolgendes 180-Grad-Rollieren oder auch -Umbiegen des Deckplattenbereichs des Blechzuschnitts erreicht.

Erfindungsgemäß werden dadurch überstehende Randbereiche der Steckdoseneinsätze vor bestimmten Krafteinwirkungen geschützt.

Im Bereich der unteren längsseitigen Kantenbereiche 16 sind Standbereiche 13 ausgebildet, wodurch sich eine Falzung 12 und eine mit dieser Verbindungs"naht" einhergehende Materialverdickung auf die Standfestigkeit bzw. Auf- oder Anlage des Gehäuses bzw. einer Mehrfachsteckdose nicht nachteilig auswirken können.

Die unteren Standbereiche 13 sind abgerundet oder halbkreisförmig ausgebildet und stellen die unteren längsseitigen Kantenbereiche 16 des Gehäuses 2 dar. Die strichlierte Linie deutet an, daß die Auflageflächen der Falzung 12 und der Standbereiche 13 in einer Ebene liegen.

Die vorteilhafte Möglichkeit, die Ausnehmungen 10 bereits im einteiligen Zuschnitt eines Bleches, beispielsweise eines verzinkten Stahlbleches auszustanzen, kann dazu genutzt werden, Vorsprünge, Kanten oder Spitzen (nicht dargestellt), welche radial nach innen gerichtet sind, mitauszubilden. Derartige Vorsprünge sichern einen festen und dauerhaften Sitz der Steckdoseneinsätze (nicht dargestellt), in deren Umfang sich die Vorsprünge der Ausnehmungen 10 während des Einsetzens eingraben.

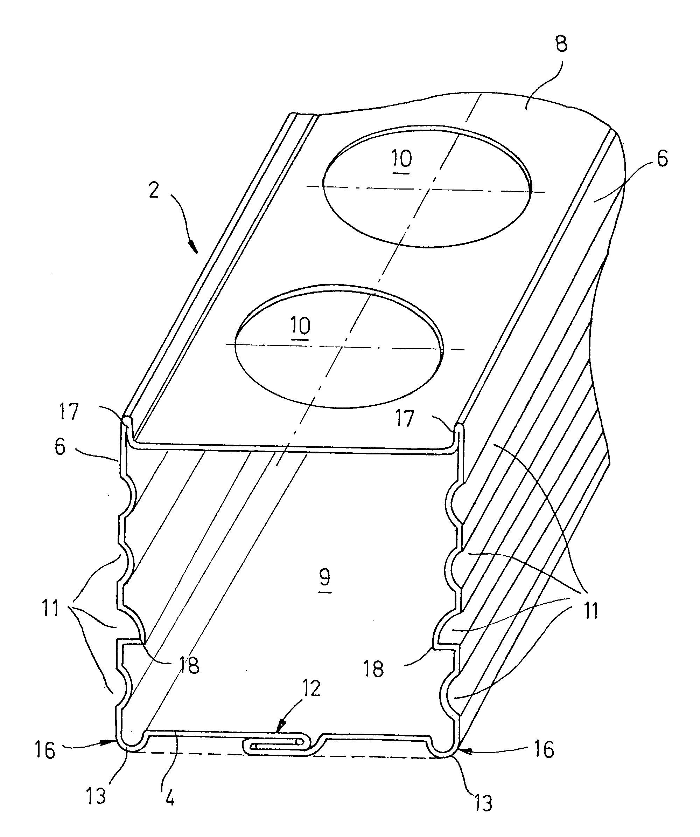

## Patentansprüche

1. Gehäuse für Mehrfachsteckdosen, welches einen Boden (4), Seitenwände (6) und eine Deckplatte (8) mit Ausnehmungen (10) für Steckdoseneinsätze, Schaltungen oder Sicherungen aufweist und aus einem Zuschnitt eines Blechs durch Umformen und Verbinden der Längskanten des Blechs gebildet ist,
dadurch **gekennzeichnet**,
daß die Seitenwände (6) obere Längskanten (17) aufweisen, welche nach oben überstehen, und daß die in das Gehäuse (2) integrierte Deckplatte (8) bezogen auf die oberen Längskanten (17) vertieft angeordnet ist.

2. Gehäuse nach Anspruch 1,
dadurch **gekennzeichnet**,
daß es aus einem Stahlblech durch Rollieren und/oder Biegen gebildet und ein Falz (12) zum Verbinden der Längskanten des Stahlblechs im Bereich des Bodens (4) ausgebildet ist.

3. Gehäuse nach Anspruch 1 oder 2,
dadurch **gekennzeichnet**,
daß die oberen Längskanten (17) durch ein 90°-Rollieren oder -Abbiegen und nachfolgendes 180°-Rollieren oder -Abbiegen der Deckplatte (8) gebildet sind.

4. Gehäuse nach einem der vorhergehenden Ansprüche,
dadurch **gekennzeichnet**,
daß die Ausnehmungen (10) in der Deckplatte (8) in dem einstückigen Blechzuschnitt und vor dem Umformen gebildet sind.

5. Gehäuse nach einem der vorhergehenden Ansprüche,
dadurch **gekennzeichnet**,
daß die Ausnehmungen (10) mit radial nach innen gerichteten Vorsprüngen, Kanten oder Spitzen zum Eingriff in Umfangsbereiche der einzusetzenden Steckdoseneinsätze versehen sind.

6. Gehäuse nach einem der vorhergehenden Ansprüche,
dadurch **gekennzeichnet**,
daß der Falz (12) als ein liegender und/oder doppelter Falz ausgebildet ist.

7. Gehäuse nach einem der vorhergehenden Ansprüche,
dadurch **gekennzeichnet**,
daß der Boden (4) Standbereiche (13) aufweist, deren Höhe wenigstens der Höhe des Falzes (12) entspricht.

8. Gehäuse nach Anspruch 7,
dadurch **gekennzeichnet**,
daß als Standbereiche (13) längsseitige Kantenbereiche (16) des Bodens (4) vorgesehen sind, welche abgerundet und nach unten überstehend ausgebildet sind.

9. Gehäuse nach einem der vorhergehenden Ansprüche,
dadurch **gekennzeichnet**,
daß die Seitenwände (6) Nuten und/oder Rillen und/ oder Ausformungen aufweisen, die insbesondere in Längsrichtung verlaufen.

10. Gehäuse nach einem der vorhergehenden Ansprüche,
dadurch **gekennzeichnet**,
daß zur Halterung und Führung von schienenförmigen Kontaktanordnungen im Innenraum (9) des Gehäuses (2) Querstege (18) an der Innenfläche der Seitenwände (6) ausgebildet sind.

11. Gehäuse nach einem der vorhergehenden Ansprüche,
dadurch **gekennzeichnet**,
daß es aus einem elektrolytisch verzinktem Stahlblech gefertigt ist.

## Claims

1. Housing for multiple sockets, which has a base (4), side walls (6) and a top plate (8) with recesses (10) for socket inserts, circuits or fuses and which is formed from a blank of a sheet by forming and joining the longitudinal edges of the sheet,
**characterized** in
that the side walls (6) have upper longitudinal edges (17), which project upwards, and that the top plate (8) integrated into the housing (2) is recessed with respect to the upper longitudinal edges (17).

2. Housing according to claim 1,
**characterized** in
that it is formed from a steel sheet by tumbling and/or bending and a welt (12) is formed for joining the longitudinal edges of the steel sheet in the area of the base (4).

3. Housing according to claim 1 or 2,
**characterized** in
that the upper longitudinal edges (17) are formed by a 90° tumbling or bending and subsequent 180° tumbling or bending of the top plate (8).

4. Housing according to one of the preceding claims,
**characterized** in
that the recesses (10) in the top plate (8) are formed in the one-piece sheet blank and prior to the forming.

5. Housing according to one of the preceding claims,
**characterized** in
that the recesses (10) are provided with radially inwardly directed projections, edges or tips for engagement in circumferential areas of the socket inserts to be inserted.

6. Housing according to one of the preceding claims,
**characterized** in
that the welt (12) is constructed as a horizontal and/ or double welt.

7. Housing according to one of the preceding claims,
**characterized** in
that the base (4) has stand areas (13), whose height at least corresponds to the height of the welt (12).

8. Housing according to claim 7,
**characterized** in
that the stand areas (13) are constituted by longitudinal side edge areas (16) of the base (4), which are rounded and constructed so as to project downwards.

9. Housing according to one of the preceding claims,
**characterized** in
that the side walls (6) have slots and/or grooves and/or indentations, which in praticular run in the longitudinal direction.

10. Housing according to one of the preceding claims,
**characterized** in
that crossbars (18) are formed on the inner face of the side walls (6) for retaining and guiding rail-like contact systems in the interior area (9) of the housing (2).

11. Housing according to one of the preceding claims,
**characterized** in
that it is made from a zinc electroplated steel sheet.

## Revendications

1. Boîtier pour prises multiples qui présente un fond (4), des parois latérales (6) et une plaque de recouvrement (8) avec des évidements (10) pour des inserts de prises de courant, des couplages ou des fusibles et qui est formé à partir d'une pièce découpée en tôle par déformation et assemblage des arêtes longitudinales de la tôle, ***caractérisé en ce que*** les parois latérales (6) présentent des arêtes longitudinales supérieures (17) qui saillent vers le haut et ***en ce que*** la plaque de recouvrement (8) intégrée dans le boîtier (2) est placée en étant enfoncée par rapport aux arêtes longitudinales supérieures (17).

2. Boîtier selon la Revendication 1, ***caractérisé en ce qu'*** il est formé à partir d'une tôle d'acier par roulage et/ou cintrage et un pli (12) est formé pour relier les arêtes longitudinales de la tôle d'acier dans la zone du fond (4).

3. Boîtier selon la Revendication 1 ou 2, ***caractérisé en ce que*** les arêtes longitudinales supérieures (17) sont formées par un roulage ou un pliage à 90° et par un roulage ou un pliage consécutif à 180° de la plaque de recouvrement (8).

4. Boîtier selon l'une quelconque des Revendications précédentes, ***caractérisé en ce que*** les évidements (10) dans la plaque de recouvrement (8) sont formés dans la pièce découpée en tôle d'une pièce et avant la déformation.

5. Boîtier selon l'une quelconque des Revendications précédentes, ***caractérisé en ce que*** les évidements (10) sont pourvus de saillies, d'arêtes ou de pointes orientées radialement vers l'intérieur pour avoir prise dans des zones à la périphérie des inserts de prise de courant à insérer.

6. Boîtier selon l'une quelconque des Revendications précédentes, ***caractérisé en ce que*** le pli (12) est configuré comme un pli couché et/ou double.

7. Boîtier selon l'une quelconque des Revendications précédentes, ***caractérisé en ce que*** le fond (4) présente des plans de niveau (l3) dont la hauteur correspond au moins à la hauteur du pli (12).

8. Boîtier selon la Revendication 7, ***caractérisé en ce que*** des zones d'arête (16) du fond (4) sont prévues sur le grand côté comme plans de niveau (13) qui sont arrondies et qui sont configurées en saillie vers le bas.

9. Boîtier selon l'une quelconque des Revendications précédentes, ***caractérisé en ce que*** les parois latérales (6) présentent des gorges et/ou des rainures et/ou des évidements moulés qui sont conçus en particulier dans le sens longitudinal.

10. Boîtier selon l'une quelconque des Revendications précédentes, ***caractérisé en ce que*** des entretoises transversales (18) sont formées sur la face intérieure des parois latérales (6) pour le support et la fixation de dispositifs de contacts en forme de rails dans l'espace intérieur (9) du boîtier (2).

11. Boîtier selon l'une quelconque des Revendications précédentes, ***caractérisé en ce qu'***il est fabriqué à partir d'une tôle d'acier galvanisée par électrolyse.
